# FASCICULE DE BREVET EUROPEEN

(11) **EP 1 963 730 B1**
(45) Date de publication et mention de la délivrance du brevet: **21.05.2014**
(21) Numéro de dépôt: 06831173.7
(22) Date de dépôt: 24.11.2006
(51) Int. Cl.: F16L 41/06

(54) **DISPOSITIF ET PROCEDE DE PERCAGE D'UNE CANALISATION EQUIPEE D'UNE SELLE DE DERIVATION**
VORRICHTUNG UND VERFAHREN ZUM ANBOHREN EINER ROHRLEITUNG MIT ABZWEIGSATTEL
DEVICE AND METHOD FOR DRILLING A PIPELINE PROVIDED WITH A DERIVATION PLATE

(30) Priorité: 30.11.2005 FR 0512184; 17.08.2006 FR 0607361
(43) Date de publication de la demande: 03.09.2008
(73) Titulaire: GDF SUEZ, 92400 Courbevoie (FR)
(72) Inventeur: CUGNART, Alain, F-75019 Paris (FR); HARDY, Michel, F-92700 Colombes (FR); MURGIER, Sylvain, F-75011 Paris (FR); PINEAU, Sylvain, F-921230 Montgeron (FR)
(74) Mandataire: Novagraaf Technologies
(86) Numéro de dépôt international: PCT/FR2006/002587
(87) Numéro de publication internationale: WO 2007/063203

(56) Documents cités:
- CH-A- 685 835
- DE-A1- 10 115 656
- US-A- 5 105 844
- PATENT ABSTRACTS OF JAPAN vol. 2000, no. 20, 10 juillet 2001 (2001-07-10) -& JP 2001 059594 A (HITACHI METALS LTD; TOKYO GAS CO LTD), 6 mars 2001 (2001-03-06)

## Description

L'invention concerne, de façon générale, les techniques liées à la conception et à l'exploitation de réseaux de fluides, notamment de gaz.

Plus précisément, l'invention concerne, selon un premier aspect, un dispositif de perçage propre à percer une canalisation de fluide équipée d'une selle de dérivation à fût taraudé et une selle respective.

L'utilisation et la pose de canalisations pour la distribution du gaz implique l'usage d'accessoires spécifiques, tels que des selles de dérivation, encore appelées "prises de branchement", permettant le raccordement d'une canalisation de plus faible diamètre à une canalisation principale.

Ces selles ou "prises de branchement" permettent de réaliser deux opérations, à savoir d'une part le soudage étanche de la canalisation de plus petit diamètre sur la canalisation principale, et d'autre part la perforation de cette canalisation principale pour assurer l'alimentation en gaz de la canalisation de plus petit diamètre.

Aujourd'hui, les canalisations de gaz sont généralement en polyéthylène et peuvent donc être thermo-soudées, mais doivent être équipées de clapet à déclenchement automatique, sensibles à une pression différentielle, pour éviter toute fuite intempestive de gaz en cas de rupture accidentelle de la canalisation de plus petit diamètre, en aval de la selle de dérivation.

Un dispositif du type précité est décrit dans le brevet US 3 692 044.

Ce dispositif connu, qui présente une géométrie complexe, un encombrement important, et un coût relativement élevé, a en outre l'inconvénient de ne pas offrir à la fois un perçage vertical et un fût vertical de sortie.

Le brevet US 5,105,844 décrit un dispositif de formation d'embranchement de forme T, qui utilise: a) deux éléments latéraux identiques formant un encliquetage sur la selle autour d'un tuyau en matière plastique élastique, et b) un dispositif de coupe.

La demande de brevet JP2001059594 décrit une selle de dérivation, qui est utilisée pour améliorer la réactivité d'un fluide sur la différence de pression et de puissance apparaissant lorsqu'un écoulement excessif du fluide est produit dans une tuyauterie côté secondaire.

La demande de brevet CH685835 décrit un dispositif de perçage qui est agencé de manière rotative dans le filetage interne d'un tuyau de dérivation et est muni d'un clapet anti-retour.

Dans ce contexte, la présente invention a pour but de proposer un dispositif de perçage exempt de l'une au moins de ces limitations et permettant en outre d'équiper une canalisation en charge d'un clapet à déclenchement automatique.

A cette fin, le dispositif de l'invention, par ailleurs conforme à la définition générique qu'en donne le préambule ci-dessus, est essentiellement caractérisé par les caractéristiques de la revendication 1.

Selon un mode de réalisation du dispositif, il est possible de prévoir que les première et deuxième configurations soient identiques, que le moyen de découpage soit formé sur le bord frontal de la deuxième extrémité du corps cylindrique, que le passage de fluide comprenne au moins un orifice latéral traversant le corps cylindrique et disposé entre les première et deuxième extrémités de ce corps, et que le clapet soit installé dans le volume libre du corps cylindrique entre le passage de fluide et la première extrémité du corps.

L'orifice latéral peut alors être disposé à plus grande proximité de la deuxième extrémité du corps cylindrique que de sa première extrémité.

Selon un deuxième mode de réalisation de l'invention, il est possible de prévoir que le dispositif comprenne des moyens de liaison réversible et des moyens de sollicitation élastique, que les moyens de liaison réversible rendent le moyen de découpage solidaire au moins en rotation de la deuxième extrémité du corps cylindrique dans la première configuration du dispositif et libèrent le moyen de découpage, au moins en translation, de la deuxième extrémité du corps cylindrique dans la deuxième configuration du dispositif, que le passage de fluide soit formé, dans la deuxième configuration du dispositif, entre la deuxième extrémité du corps cylindrique et le moyen de découpage, dont l'un forme un obturateur et l'autre un siège pour le clapet, et que les moyens de sollicitation élastique appartiennent au clapet et sollicitent le moyen de découpage dans un sens propre à l'écarter de la deuxième extrémité du corps cylindrique.

Dans ce cas, les moyens de liaison réversible peuvent comprendre au moins une paire de reliefs complémentaires, chaque paire comprenant elle-même des premier et deuxième reliefs dont l'un appartient au corps cylindrique et dont l'autre appartient au moyen de découpage.

Par exemple, les reliefs complémentaires comprennent des reliefs frontaux saillants et rentrants qui s'interpénètrent, ou encore une liaison à baïonnette sollicitée dans le sens du blocage par vissage du corps cylindrique dans le fût.

Le dispositif de l'invention comprend au moins un joint d'étanchéité annulaire porté par le corps cylindrique et propre à obturer de façon étanche le fût de la selle.

Selon l'invention, le fût taraudé présente, du côté opposé à la canalisation, un rebord annulaire interne formant butée pour la première extrémité du corps cylindrique, et le joint annulaire est interposé entre ce rebord interne et la première extrémité du corps cylindrique et comprimé axialement pour une position dévissée du corps cylindrique à l'intérieur du fût taraudé.

Par ailleurs, le fût taraudé présente de préférence, du côté de la canalisation, une embase de diamètre supérieur au diamètre du moyen de découpage, ce dernier étant par exemple constitué par une scie-cloche.

L'invention concerne également un procédé de perçage d'une canalisation de fluide en charge, comprenant les étapes consistant à visser un dispositif tel que précédemment défini dans le fût taraudé de la selle de dérivation équipant cette canalisation jusqu'à ce que le moyen de découpage ait découpé la canalisation, et à dévisser ce dispositif dans le fût jusqu'à ce que le moyen de découpage soit dégagé et espacé de là découpe pratiquée dans la canalisation.

D'autres caractéristiques et avantages de l'invention ressortiront clairement de la description qui en est faite ci-après, à titre indicatif et nullement limitatif, en référence aux dessins annexés, dans lesquels :
- la figure 1A est une vue de côté d'un dispositif utilisé avec un mode de réalisation de l'invention;
- la figure 1B est une vue en coupe longitudinale du dispositif illustré à la figure 1A;
- la figure 2A est une vue de côté d'un dispositif utilisé avec un mode de réalisation de l'invention;
- la figure 2B est une vue en coupe longitudinale du dispositif illustré à la figure 2A;
- les figures 3A à 3C sont des vues de côté de diverses variantes d'un dispositif utilisé avec le mode de réalisation de l'invention, représenté dans la configuration qu'il atteint après perçage de la canalisation;
- la figure 4 est une vue de dessus de la première extrémité du dispositif illustré à la figure 1A;
- la figure 5 est une vue de dessus de la première extrémité du dispositif illustré à la figure 2A;
- la figure 6 est une vue en coupe longitudinale d'une canalisation de fluide équipée d'une selle de dérivation dans le fût de laquelle est inséré un dispositif utilisé avec le mode de réalisation de l'invention, et représenté au début d'une phase de vissage dans le fût;
- la figure 7A est une vue en coupe semblable à la figure 6, sur laquelle le dispositif est représenté en cours de vissage dans le fût et de perçage de la canalisation;
- la figure 7B est une vue en coupe semblable à la figure 6, sur laquelle le dispositif est représenté en fin de vissage dans le fût, après perçage de la canalisation;
- la figure 7C est une vue en coupe semblable à la figure 6, sur laquelle le dispositif est représenté en cours de dévissage dans le fût, après perçage de la canalisation;
- la figure 7D est une vue en coupe semblable à la figure 6, sur laquelle le dispositif est représenté dans sa position définitive, en fin de dévissage dans le fût et après perçage de la canalisation;
- la figure 8 est une vue en coupe longitudinale d'une canalisation de fluide équipée d'une selle de dérivation dans le fût de laquelle est inséré un dispositif conforme à une deuxième variante utilisée avec le mode de réalisation de l'invention, et représenté au début d'une phase de vissage dans le fût;
- la figure 9A est une vue en coupe semblable à la figure 8, sur laquelle le dispositif est représenté en cours de vissage dans le fût et de perçage de la canalisation;
- la figure 9B est une vue en coupe semblable à la figure 8, sur laquelle le dispositif est représenté en fin de vissage dans le fût, après perçage de la canalisation;
- la figure 9C est une vue en coupe semblable à la figure 8, sur laquelle le dispositif est représenté en cours de dévissage dans le fût, après perçage de la canalisation;
- la figure 9D est une vue en coupe semblable à la figure 8, sur laquelle lè dispositif est représenté dans sa position définitive, en fin de dévissage dans le fût et après perçage de la canalisation; et
- la figure 10 illustre un mode de réalisation du dispositif de l'invention, par laquelle l'étanchéité est optimisée.

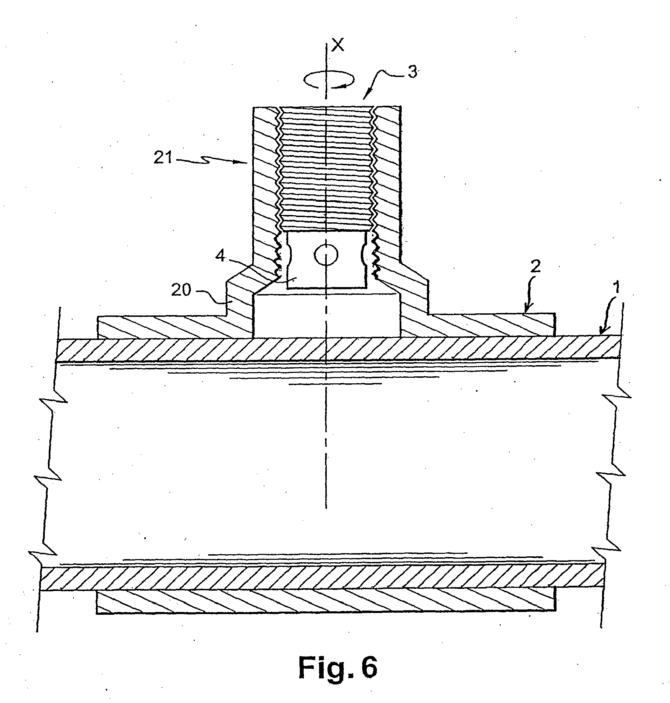

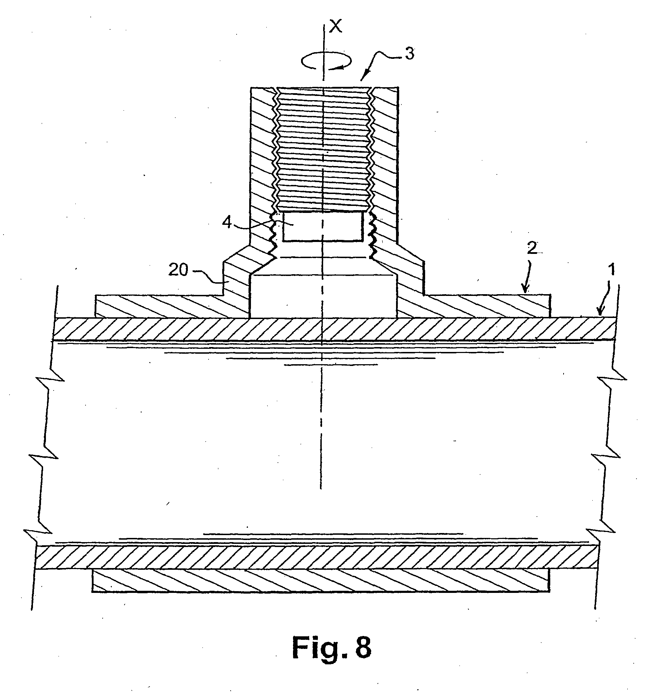

Comme annoncé précédemment, l'invention concerne (figures 6 et 8) un dispositif de perçage propre à percer une canalisation de fluide 1, par exemple en polyéthylène, équipée d'une selle de dérivation 2 présentant elle-même un fût taraudé 21.

Selon l'invention, ce dispositif comprend un corps cylindrique creux 3 d'axe X, un moyen de découpage par exemple constitué par une scie-cloche 4, un passage 5 de fluide, et un clapet 6.

Un support 34, disposé dans le volume interne libre 30 du corps cylindrique 3 et par exemple conformé en croisillon, supporte à coulissement l'axe 64 du clapet 6.

Le corps cylindrique 3 est ouvert à l'une au moins de ces extrémités, cette extrémité 31 étant pourvue de reliefs d'entraînement appropriés permettant d'entraîner le corps cylindrique 3 en rotation autour de son axe X.

Le corps cylindrique 3 est introduit dans le fût taraudé 21 par son extrémité 31 avant mise en place de la selle de dérivation 2 sur la canalisation 1.

Par ailleurs, le corps cylindrique 3 porte un filetage sur sa face externe 33, de sorte qu'il peut être vissé et dévissé à volonté dans le fût 21 de la selle 2 par rotation de son extrémité 31.

La scie-cloche 4, qui est adaptée à découper la canalisation 1 au droit du fût 21 par vissage du corps 3, est au moins temporairement portée par l'extrémité 32 du corps 3.

Le passage de fluide 5, qui est en communication avec l'intérieur de la canalisation 1 après découpage de celle-ci, est quant à lui au moins temporairement défini entre la scie-cloche 4 et l'extrémité 31 du corps cylindrique 3.

Enfin, le clapet 6 est sensible à une pression différentielle et adapté à obturer en cas de besoin le volume interne 30 du corps cylindrique 3 de façon étanche.

Ce clapet comprend typiquement un obturateur 61, un siège d'obturateur 62, un ressort de rappel 63, et un axe 64, monté coulissant dans le support 34.

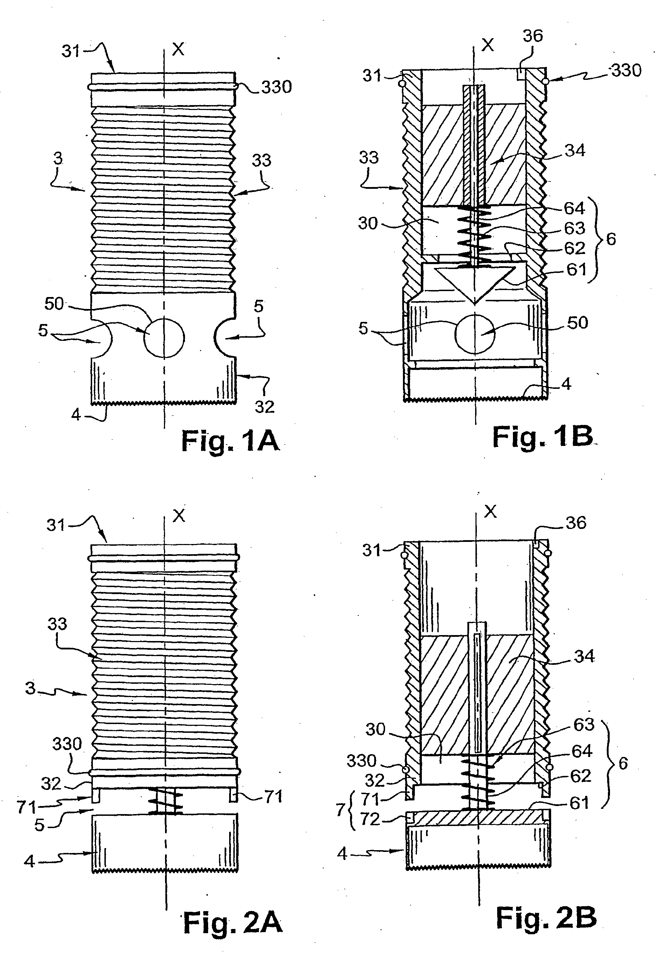

Dans la première variante utilisée avec l'invention, illustré aux figures 1A, 1B, 4, et 6 à 7D, la scie-cloche 4 est par exemple directement constituée par le bord frontal de l'extrémité 32 du corps cylindrique 3.

Le passage de fluide 5 est formé par un ou plusieurs orifices latéraux 50 traversant le corps cylindrique 3 et disposés entre les extrémités 31 et 32 de ce corps 3, typiquement à plus grande proximité de l'extrémité 32 de ce dernier que de son extrémité d'entraînement 31.

Le clapet 6 est quant à lui installé dans le volume libre 30 du corps cylindrique 3, entre le passage de fluide 5 et l'extrémité d'entraînement 31 du corps 3.

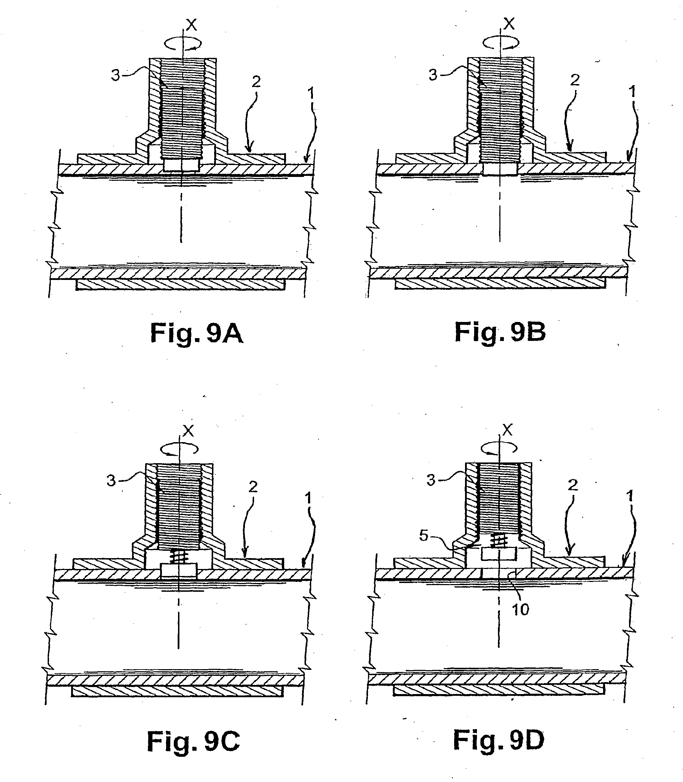

Dans la deuxième variante utilisée avec l'invention, illustré aux figures 2A, 2B, 3A à 3C, 5, et 8 à 9D, le dispositif est susceptible d'adopter au moins deux configurations différentes (voir par exemple figures 8 et 9D) et comprend en outre des moyens de liaison réversible 7 et des moyens de sollicitation élastique 63.

Les moyens de liaison réversible 7 rendent la scie-cloche 4 solidaire, au moins en rotation, de l'extrémité 32 du corps cylindrique 3 dans la première configuration du dispositif illustrée aux figures 8, 9A et 9B, et libèrent la scie-cloche 4 de cette extrémité 32, au moins en translation, dans la deuxième configuration du dispositif illustrée aux figures 2A, 2B, 9C et 9D.

Dans la deuxième configuration du dispositif, le passage de fluide 5 est ainsi formé entre l'extrémité 32 du corps cylindrique 3 et la scie-cloche 4, l'une de cette extrémité et de cette scie-cloche formant un obturateur 61 pour le clapet 6, et l'autre un siège 62 pour ce clapet 6.

Bien qu'appartenant au clapet 6, les moyens de sollicitation élastique 63, qui sont par exemple constitués par un ressort hélicoïdal, ont pour fonction de solliciter la scie-cloche 4 dans un sens propre à l'écarter de l'extrémité 32 du corps cylindrique 3 et donc de définir le passage de fluide 5, au moins en l'absence de toute pression différentielle susceptible de fermer le clapet 6.

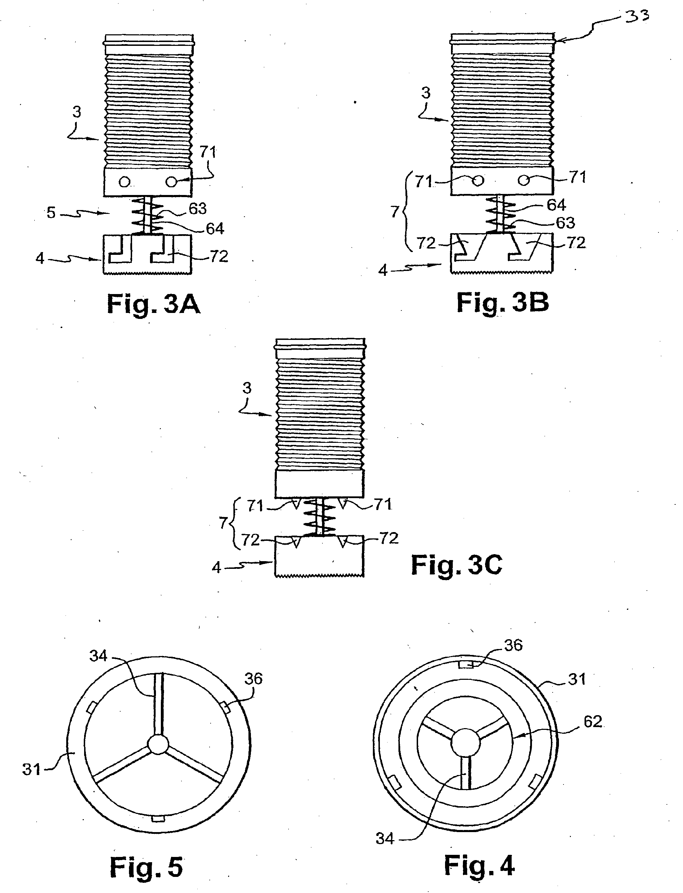

Comme le montrent notamment les figures 3A à 3C, les moyens de liaison réversible 7 comprennent typiquement une ou plusieurs paires de reliefs complémentaires 71 et 72.

L'un des reliefs, par exemple 71, de chaque paire appartient au corps cylindrique 3, tandis que l'autre relief, 72, appartient à la scie-cloche 4.

Le relief 71 peut être constitué par un ergot et le relief 72 par une rainure en équerre (figures 3A et 3B), les moyens de liaison réversible 7 constituant alors une ou plusieurs liaisons à baïonnette.

Dans ce cas, cette liaison doit être sollicitée dans le sens du blocage par vissage du corps cylindrique 3 dans le fût 21, et dans le sens d'une libération par dévissage du corps cylindrique 3 dans le fût 21.

Comme le montrent les figures 2A, 2B, et 3C, les reliefs complémentaires 71 et 72 peuvent aussi comprendre des reliefs frontaux saillants et rentrants qui s'interpénètrent.

Un ou plusieurs joints d'étanchéité annulaires tels que 330 et 331 sont prévus, par exemple sur le corps cylindrique 3, pour obturer de façon étanche le fût 21 de la selle 2.

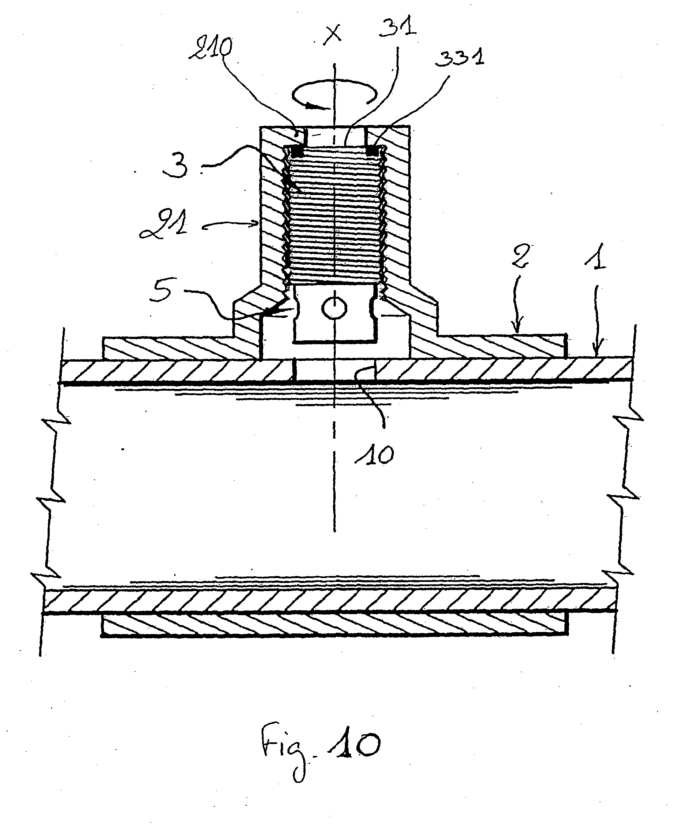

Selon un mode de réalisation de l'invention illustré à la figure 10, le fût taraudé 21 présente, du côté opposé à la canalisation 1, un rebord annulaire interne 210 formant butée pour la première extrémité 31 du corps cylindrique, ce qui permet d'interposer le joint annulaire 331 entre ce rebord interne 210 et la première extrémité 31 du corps cylindrique.

Ce joint annulaire 331 peut par exemple être logé dans une gorge périphérique du pourtour frontal du corps cylindrique 3, mais peut être aussi logé dans une gorge interne pratiquée dans le rebord 210 du fût 21.

Grâce à cet agencement, le joint annulaire 331. peut être comprimé axialement de façon efficace par dévissage du corps cylindrique 3 à l'intérieur du fût taraudé 21, ne risque pas d'être endommagé par frottement sur le taraudage du fût 21, et ne subit qu'un cisaillement modéré pour atteindre sa position d'étanchéité.

Par ailleurs (figures 6 à 9D), le fût taraudé 21 présente, du côté de la canalisation 1, une embase 20 de diamètre supérieur au diamètre de la scie-cloche 4.

L'utilisation du dispositif conforme à la première variante est illustrée aux figures 6 à 7D.

Ce dispositif est d'abord introduit dans le fût taraudé 21.

Quel que soit la variante, cette introduction doit être réalisée avant le montage de la selle 2 sur la canalisation.

Une fois que le pas de vis de la face externe 33 du corps 3 est engagé dans le taraudage du fût 21 et que la selle 2 est en place sur la canalisation 1, un mouvement de rotation est appliqué au corps 3 (figure 6) pour visser le dispositif dans le fût 21 à l'aide d'un outil approprié introduit dans l'extrémité 31 du corps 3 et coopérant avec les reliefs 36.

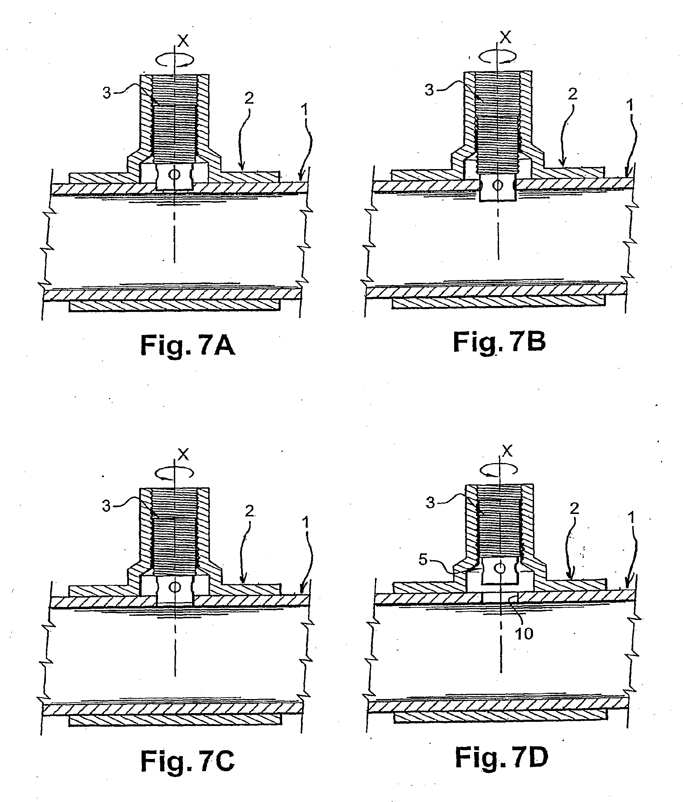

Arrivé en contact avec la canalisation 1 (figure 7A), la scie-cloche 4, toujours par application du mouvement de rotation, découpe la paroi de cette canalisation.

La pastille découpée dans cette paroi est conservée dans la scie-cloche (figure 7B).

Le dispositif est alors dévissé dans le fût 21 par inversion de son sens de rotation (figure 7C).

Ce dévissage permet au dispositif de se dégager de la découpe 10 pratiquée dans la paroi (figure 7D).

Le fluide sous pression provenant de la canalisation perforée s'engouffre alors dans les orifices 50 du passage 5 et, en l'absence de contre-pression appliquée sur l'extrémité ouverte 31 du corps 3, provoque la fermeture du clapet 6, assurant ainsi l'étanchéité de l'ensemble vis-à-vis du fluide circulant dans la canalisation 1.

Une fois le fût 21 raccordé à une installation étanche, l'application d'une contre-pression dans cette installation permet d'ouvrir le clapet 6 et donc de raccorder cette installation à la canalisation 1.

L'utilisation du dispositif conforme à la deuxieme variante utilisée avec l'invention est illustrée aux figures 8 à 9D.

L'hypothèse est faite, sur la figure 8, que les moyens de liaison réversible 7 sont constitués par une liaison à baïonnette.

Ce dispositif est d'abord introduit dans le fût taraudé 21 de la même façon que le dispositif conforme au mode de réalisation.

A l'aide d'un outil approprié introduit dans l'extrémité 31 du corps 3 et coopérant avec les reliefs 36, un mouvement de rotation est appliqué au corps 3 (figure 8) pour visser le dispositif dans le fût 21, la liaison baïonnette étant alors sollicitée dans le sens du blocage.

Arrivé en contact avec la canalisation 1 (figure 9A), la scie-cloche 4, toujours par application du mouvement de rotation, découpe la paroi de cette canalisation.

La pastille découpée dans cette paroi est conservée dans la scie-cloche (figure 9B).

Le dispositif est alors dévissé dans le fût 21 par inversion de son sens de rotation (figure 9C). La liaison baïonnette étant alors sollicitée dans le sens du déblocage, la scie-cloche 4 s'écarte de l'extrémité 32 du corps 3 sous l'effet du ressort 63.

Le dévissage permet au dispositif de se dégager de la découpe 10 pratiquée dans la paroi (figure 9D).

Le fluide sous pression provenant de la canalisation perforée s'engouffre alors dans le passage 5 ouvert entre la scie-cloche 4 et l'extrémité 32 du corps 3.

En l'absence de contre-pression appliquée sur l'extrémité ouverte 31 de ce corps 3, le fluide sous pression provoque la fermeture du clapet 6, assurant ainsi l'étanchéité de l'ensemble vis-à-vis du fluide circulant dans la canalisation 1.

Une fois le fût 21 raccordé à une installation étanche, l'application d'une contre-pression dans cette installation permet d'ouvrir le clapet 6 et donc de raccorder cette installation à la canalisation 1.

## Revendications

1. Dispositif de perçage, propre à percer une canalisation de fluide (1) équipée d'une selle de dérivation (2) à fût taraudé (21), et selle de dérivation à fût taraudé, ledit dispositif comprenant un corps cylindrique creux (3), un moyen de découpage (4), un passage (5) de fluide, et un clapet (6), le corps cylindrique (3) présentant un volume interne libre (30), un axe (X), une première extrémité (31) débouchante par laquelle ce corps (3) peut être entraîné en rotation autour de son axe (X), une deuxième extrémité (32) opposée à la première, et une face externe filetée (33) par laquelle ce corps (3) peut être vissé et dévissé dans ce fût (21), le moyen de découpage (4) étant porté, au moins dans une première configuration du dispositif, par la deuxième extrémité (32) du corps (3) et adapté à découper la canalisation (1) au droit du fût (21) de la selle (2) par vissage du corps (3), le passage (5) de fluide étant défini, au moins dans une deuxième configuration du dispositif, entre le moyen de découpage (4) et la première extrémité (31) du corps cylindrique (3) et en communication avec l'intérieur de la canalisation (1) après découpage de celle-ci, le clapet (6) étant sensible à une pression différentielle et adapté à obturer sélectivement le volume interne (30) du corps cylindrique (3) de façon étanche, ledit dispositif de perçage comprenant au moins un joint d'étanchéité annulaire (331) porté par le corps cylindrique (3) et propre à obturer de façon étanche le fût (21) de la selle (2), **caractérise en ce que** ledit fût (21) présente, du côté opposé à la canalisation (1), un rebord annulaire interne (210) formant butée pour la première extrémité (31) du corps cylindrique, ledit joint d'étanchéité annulaire (331) étant interposé entre ce rebord interne (210) et la première extrémité (31) du corps cylindrique, et
**en ce que** le corps cylindrique est agencé pour percer la canalisation de fluide dans la position vissée et pour comprimer axialement le joint d'étanchéité annulaire (331) dans la position dévissée.

2. Dispositif de perçage selon la revendication 1, **caractérisé en ce que** les première et deuxième configurations sont identiques, **en ce que** le moyen de découpage (4) est formé sur le bord frontal de la deuxième extrémité (32) du corps cylindrique (3), **en ce que** le passage (5) de fluide comprend au moins un orifice latéral (50) traversant le corps cylindrique (3) et disposé entre les première et deuxième extrémités (31, 32) de ce corps (3), et **en ce que** le clapet (6) est installé dans le volume libre (30) du corps cylindrique (3) entre le passage (5) et la première extrémité (31) du corps (3).

3. Dispositif de perçage selon la revendication 2, **caractérisé en ce que** l'orifice latéral (50) est disposé à plus grande proximité de la deuxième extrémité (32) du corps cylindrique (3) que de sa première extrémité (31).

4. Dispositif de perçage selon la revendication 1, **caractérisé en ce qu'**il comprend des moyens de liaison réversible (7) et des moyens de sollicitation élastique (63), **en ce que** les moyens de liaison réversible (7) rendent le moyen de découpage (4) solidaire au moins en rotation de la deuxième extrémité (32) du corps cylindrique (3) dans la première configuration du dispositif et libèrent le moyen de découpage (4), au moins en translation, de la deuxième extrémité (32) du corps cylindrique (3) dans la deuxième configuration du dispositif, **en ce que** le passage (5) de fluide est formé, dans la deuxième configuration du dispositif, entre la deuxième extrémité (32) du corps cylindrique (3) et le moyen de découpage (4), dont l'un forme un obturateur (61) et l'autre un siège (62) pour le clapet (6), et **en ce que** les moyens de sollicitation élastique (63) appartiennent au clapet (6) et sollicitent le moyen de découpage (4) dans un sens propre à l'écarter de la deuxième extrémité (32) du corps cylindrique (3).

5. Dispositif de perçage selon la revendication 4, **caractérisé en ce que** les moyens de liaison réversible (7) comprennent au moins une paire de reliefs complémentaires (71, 72), chaque paire comprenant des premier et deuxième reliefs (71, 72) dont l'un appartient au corps cylindrique (3) et dont l'autre appartient au moyen de découpage (4).

6. Dispositif de perçage selon la revendication 5, **caractérisé en ce que** les reliefs complémentaires (71, 72) comprennent des reliefs frontaux saillants et rentrants qui s'interpénètrent.

7. Dispositif de perçage selon la revendication 5, **caractérisé en ce que** les moyens de liaison réversible (7) comprennent une liaison à baïonnette sollicitée dans le sens du blocage par vissage du corps cylindrique (3) dans le fût (21).

8. Dispositif de perçage selon l'une quelconque des revendications précédentes, **caractérisé en ce que** le fût taraudé (21) présente, du côté de la canalisation (1), une embase (20) de diamètre supérieur au diamètre du moyen de découpage (4).

9. Dispositif de perçage selon l'une quelconque des revendications précédentes, **caractérisé en ce que** le moyen de découpage (4) est constitué par une scie-cloche.

10. Procédé de perçage d'une canalisation (1) de fluide en charge, comprenant les étapes consistant à visser un dispositif selon l'une quelconque des revendications précédentes dans le fût taraudé (21) de la selle de dérivation (2) équipant cette canalisation (1) jusqu'à ce que le moyen de découpage (4) ait découpé la canalisation (1), et à dévisser ce dispositif dans le fût (21) jusqu'à ce que le moyen de découpage (4) soit dégagé et espacé de la découpe (10) pratiquée dans la canalisation (1).

## Patentansprüche

1. Bohrvorrichtung, die ausgelegt ist, um eine Flüssigkeitsrohrleitung (1) zu durchbohren, die mit einem Abzweigsattel (2) mit Hohlschaft (21) ausgestattet ist, und Abzweigsattel mit Hohlschaft, wobei die Vorrichtung einen hohlen zylindrischen Körper (3) umfasst, ein Schneidemittel (4), einen Flüssigkeitsdurchgang (5) und eine Klappe (6), wobei der zylindrische Körper (3) ein freies inneres Volumen (30) aufweist, eine Achse (X), ein erstes Durchgangsende (31), durch das dieser Körper (3) um seine Achse (X) in Rotation versetzt werden kann, ein zweites Ende (32) des dem Ersten gegenüber liegt, und eine äußere gewindegeschnittene Seite (33), durch die dieser Körper (3) in diesen Schaft (21) geschraubt und daraus herausgeschraubt werden kann, wobei das Schneidemittel (4), mindestens in einer ersten Konfiguration der Vorrichtung, vom zweiten Ende (32) des Körpers (3) getragen wird und ausgelegt ist, um die Rohrleitung (1) senkrecht zum Schaft (21) des Sattels (2) durch Verschraubung des Körpers (3) zu schneiden, wobei der Durchgang (5) der Flüssigkeit, mindestens in einer zweiten Konfiguration der Vorrichtung, zwischen dem Schneidemittel (4) und dem ersten Ende (31) des zylindrischen Körpers (3) und in Kommunikation mit dem Inneren der Rohrleitung (1) nach dem Schneiden dieser definiert ist, wobei die Klappe (6) im Wesentlichen einen Differenzdruck aufweist und ausgelegt ist, um das innere Volumen (30) des zylindrischen Körpers (3) auf dichte Weise selektiv zu verschließen, wobei die Bohrvorrichtung mindestens eine ringförmige Dichtung (331) aufweist, die vom zylindrischen Körper (3) getragen wird und ausgelegt ist, um auf dichte Weise den Schaft (21) des Sattels (2) zu verschließen, **dadurch gekennzeichnet, dass** der Schaft (21), auf der Seite, die der Rohrleitung (1) gegenüber liegt, einen ringförmigen inneren Vorsprung (210) aufweist, der einen Anschlag für das erste Ende (31) des zylindrischen Körpers bildet, wobei die ringförmige Dichtung (331) zwischen diesem inneren Vorsprung (210) und dem ersten Ende (31) des zylindrischen Körpers gestellt ist,
und dadurch, dass der zylindrische Körper angeordnet ist, um die Flüssigkeitsrohrleitung in der verschraubten Position zu durchbohren, und um axial die ringförmige Dichtung (331) in der abgeschraubten Position zu komprimieren.

2. Bohrvorrichtung nach Anspruch 1, **dadurch gekennzeichnet, dass** die erste und die zweite Konfiguration identisch sind, dadurch, dass das Schneidemittel (4) auf dem vorderen Rand des zweiten Endes (32) des zylindrischen Körpers (3) gebildet ist, dadurch, dass der Flüssigkeitsdurchgang (5) mindestens eine seitliche Öffnung (50) aufweist, die den zylindrischen Körper (3) durchquert und zwischen dem ersten und dem zweiten Ende (31, 32) dieses Körpers (3) angeordnet ist, und dadurch, dass die Klappe (6) im freien Volumen (30) des zylindrischen Körpers (3) installiert ist, zwischen dem Durchgang (5) und dem ersten Ende (31) des Körpers (3).

3. Bohrvorrichtung nach Anspruch 2, **dadurch gekennzeichnet, dass** die seitliche Öffnung (50) in größerer Nähe vom zweiten Ende (32) des zylindrischen Körpers (3) als von seinem ersten Ende (31) angeordnet ist.

4. Bohrvorrichtung nach Anspruch 1, **dadurch gekennzeichnet, dass** sie Mittel zur umkehrbaren Verbindung (7) und Mittel zur elastischen Beanspruchung (63) umfasst, dadurch, dass die Mittel zur umkehrbaren Verbindung (7) das Schneidemittel (4) mindestens in Rotation fest mit dem zweiten Ende (32) des zylindrischen Körpers (3) in der ersten Konfiguration der Vorrichtung verbinden und die Schneidevorrichtung (4) mindestens in Translation vom zweiten Ende (32) des zylindrischen Körpers (3) in der zweiten Konfiguration der Vorrichtung freisetzen, dadurch, dass der Flüssigkeitsdurchgang (5) in der zweiten Konfiguration der Vorrichtung zwischen dem zweiten Ende (32) des zylindrischen Körpers (3) und dem Schneidemittel (4) gebildet ist, wobei das eine einen Verschluss (61) und das andere einen Sitz (62) für die Klappe (6) bildet, und dadurch, dass die Mittel zur elastischen Beanspruchung (63) zur Klappe (6) gehören und das Schneidemittel (4) in einer Richtung beanspruchen, die geeignet ist, um es vom zweiten Ende (32) des zylindrischen Körpers (3) zu entfernen.

5. Bohrvorrichtung nach Anspruch 4, **dadurch gekennzeichnet, dass** die Mittel zur umkehrbaren Verbindung (7) mindestens ein Paar von komplementären Reliefs (71, 72) umfassen, wobei jedes Paar ein erstes und ein zweites Relief (71, 72) umfasst, wobei das eine zum zylindrischen Körper (3) gehört, und wobei das andere zum Schneidemittel (4) gehört.

6. Bohrvorrichtung nach Anspruch 5, **dadurch gekennzeichnet, dass** die komplementären Reliefs (71, 72) frontale hervorspringende und zurücktretende Reliefs umfassen, die ineinander eindringen.

7. Bohrvorrichtung nach Anspruch 5, **dadurch gekennzeichnet, dass** die Mittel zur umkehrbaren Verbindung (7) eine Bajonettverbindung umfassen, die in der Richtung der Blockierung durch die Verschraubung des zylindrischen Körpers (3) im Schaft (21) beansprucht wird.

8. Bohrvorrichtung nach einem der vorhergehenden Ansprüche, **dadurch gekennzeichnet, dass** der Hohlschaft (21) an der Seite der Rohrleitung (1) einen Sockel (20) mit einem Durchmesser aufweist, der größer als der Durchmesser des Schneidemittels (4) ist.

9. Bohrvorrichtung nach einem der vorhergehenden Ansprüche, **dadurch gekennzeichnet, dass** das Schneidemittel (4) aus einer Lochsäge besteht.

10. Bohrverfahren einer Flüssigkeitsrohrleitung (1) im Betrieb, umfassend die Schritte, bestehend aus dem Verschrauben einer Vorrichtung nach einem der vorhergehenden Ansprüche im Hohlschaft (21) des Abzweigsattels (2), der diese Rohrleitung (1) ausstattet, bis das Schneidemittel (4) die Rohrleitung (1) geschnitten hat, und dem Abschrauben dieser Vorrichtung im Schacht (21), bis das Schneidemittel (4) vom Schnitt (10), der in der Rohrleitung (1) durchgeführt wird, entfernt und beabstandet ist.

## Claims

1. Perforating device capable of perforating a fluid duct (1) equipped with a connector seat (2) with a tapped barrel (21), and connector seat with a tapped barrel, said device comprising a hollow cylindrical body (3), cutting means (4), a fluid passage (5) and a valve (6), the cylindrical body (3) presenting a free internal volume (30), an axis (X), a first open end (31) via which the body (3) may be driven in rotation around its axis (X), a second end (32) opposite to the first, and a threaded external face (33) by which the body (3) may be screwed or unscrewed into the barrel (21), the cutting means (4) being held, at least in a first configuration of the device, by the second end (32) of the body (3) and are suited to cutting the duct (1) at the level of the barrel (21) of the seat (2) by screwing in the body (3), the fluid passage (5) being defined, at least in a second configuration of the device, between the cutting means (4) and the first end (31) of the cylindrical body (3) and in communication with the interior of the duct (1) after the latter has been cut, the valve (6) being sensitive to a differential pressure and capable of selectively sealing the internal volume (30) of the cylindrical body (3) so that there are no leaks, said perforating device comprising at least one annular seal (331) carried by the cylindrical body (3) and capable of imperviously sealing the barrel (21) of the seat (2), **characterised in that** the barrel (21) has, on the side opposite the duct (1), an internal annular lip (210) which acts as a stop for the first end (31) of the cylindrical body, said annular seal (331) being interposed between this internal lip (210) and the first end (31) of the cylindrical body and **in that** the cylindrical body is arranged to perforate the fluid duct in the screwed position and to axially compress the annular seal (331) in the unscrewed position.

2. Perforating device of claim 1, **characterised in that** the first and second configurations are identical, **in that** the cutting means (4) are formed on the front edge of the second end (32) of the cylindrical body (3), **in that** the fluid passage (5) comprises at least one lateral orifice (50) which passes through the cylindrical body (3) and is positioned between the first and second ends (31, 32) of this body (3), and **in that** the valve (6) is fitted inside the free volume (30) of the cylindrical body (3) between the passage (5) and the first end (31) of the body (3).

3. Perforating device of claim 2, **characterised in that** the lateral orifice (50) is fitted closer to the second end (32) of the cylindrical body (3) than to the first end (31) of the cylindrical body (3).

4. Perforating device of claim 1, **characterised in that** it comprises reversible connection means (7) and elastic load means (63), **in that** the reversible connection means (7) attach the cutting means (4) at least in rotation to the second end (32) of the cylindrical body (3) in the first configuration of the device and free the cutting means (4), at least in movement, from the second end (32) of the cylindrical body (3) in the second configuration of the device, **in that** the fluid passage (5) is formed in the second configuration of the device, between the second end (32) of the cylindrical body (3) and the cutting means (4), of which one forms a seal (61) and the other a seat (62) for the valve (6), and **in that** the elastic load means (63) belong to the valve (6) and load the cutting means (4) in a direction which moves them away from the second end (32) of the cylindrical body (3).

5. Perforating device of claim 4, **characterised in that** the reversible connection means (7) comprise at least one pair of complementary extended parts (71, 72), wherein each pair comprises first and second extended parts (71, 72) of which one is part of the cylindrical body (3) and the other is part of the cutting means (4).

6. Perforating device of claim 5, **characterised in that** the complementary extended parts (71, 72) have convex and concave frontal protrusions and recesses which inter-penetrate one another.

7. Perforating device of claim 5, **characterised in that** the reversible connection means (7) have a bayonet connection that is loaded in the locking direction by screwing the cylindrical body (3) into the barrel (21).

8. Perforating device of any of the previous claims, **characterised in that** the tapped barrel (21) has, on the side of the duct (1), a base (20) with a diameter that is greater than the diameter of the cutting means (4).

9. Perforating device of any of the previous claims, **characterised in that** the cutting means (4) are formed by a hole saw.

10. Process for perforating a loaded fluid duct (1), comprising the steps consisting of screwing a device according to any of the previous claims into the tapped barrel (21) of the connector seat (2) fitted to this duct (1) until the cutting means (4) cut the duct (1), and of unscrewing this device from the barrel (21) until the cutting means (4) are removed and are distant from the cut-out (10) made in the duct (1).
